# EUROPÄISCHE PATENTSCHRIFT

(11) **EP 2 609 674 B1**
(45) Veröffentlichungstag und Bekanntmachung des Hinweises auf die Patenterteilung: **02.07.2014**
(21) Anmeldenummer: 11749081.3
(22) Anmeldetag: 27.07.2011
(51) Int. Cl.: H02K 5/22

(54) **ANSCHLUSSANORDNUNG UND ELEKTROMOTOR MIT EINER ANSCHLUSSANORDNUNG**
CONNECTION ARRANGEMENT AND ELECTRIC MOTOR HAVING SUCH A CONNECTION ARRANGEMENT
DISPOSITIF DE CONNEXION ET MOTEUR ÉLECTRIQUE POURVU D'UN TEL DISPOSITIF DE CONNEXION

(30) Priorität: 24.08.2010 DE 102010035408
(43) Veröffentlichungstag der Anmeldung: 03.07.2013
(73) Patentinhaber: Sew-Eurodrive GmbH & Co. KG, 76646 Bruchsal (DE)
(72) Erfinder: RICHTER, Thomas, 76275 Ettlingen (DE); JETTER, Tobias, 76642 Bruchsal (DE)
(74) Vertreter: Tüngler, Eberhard
(86) Internationale Anmeldenummer: PCT/EP2011/003750
(87) Internationale Veröffentlichungsnummer: WO 2012/025181

(56) Entgegenhaltungen:
- EP-A1- 1 971 012
- DE-A1- 2 313 378
- DE-U1- 7 900 143
- US-A- 5 063 314

## Beschreibung

Die Erfindung betrifft eine Anschlussanordnung und Elektromotor mit einer Anschlussanordnung.

Bei Elektromotoren ist bekannt, am Gehäuse des Elektromotors einen Anschlusskasten anzuordnen, in welchem Anschlussvorrichtungen vorgesehen sind, mit welchen elektrische Verbindungen zwischen den elektrischen Versorgungsleitungen des Motors und den Statorwicklungsdrähten herstellbar sind.

Aus der DE 2 313 378 ist ein Gehäuse für explosionsgeschützte Maschinen bekannt.

Aus der DE 79 00 143 U ist eine Klemmenplatte für explosionsgeschützte Motoren bekannt.

Aus der US 5 063 314 ist eine Anschlussvorrichtung bekannt.

Aus der EP 1 971 012 A1 ist ein Klemmbrett bekannt.

Der Erfindung liegt daher die Aufgabe zugrunde, die Sicherheit weiterzubilden, insbesondere im explosionsgeschützten Bereich.

Erfindungsgemäß wird die Aufgabe bei der Anschlussanordnung nach den in Anspruch 1 und bei dem und Elektromotor mit einer Anschlussanordnung nach den in Anspruch 15 angegebenen Merkmalen gelöst.

Wichtige Merkmale bei der Anschlussanordnung, insbesondere zum Herstellen einer Verbindung von Statorwicklungsleitungen eines Elektromotors mit Versorgungsleitungen, sind, dass Anschlussvorrichtungen auf einer Klemmenplatte angeordnet sind, insbesondere an der Klemmenplatte befestigt sind,
wobei an Anschlussvorrichtungen jeweils ein Kabelschuh verbunden ist, an dem eine Leitung, insbesondere ein Wicklungsdraht, elektrisch verbunden ist,
**wobei die Klemmenplatte mittels zumindest einer Schraube mit einem Gehäuseteil** des **Motors, insbesondere mit dessen Statorgehäuse, verbunden ist, wobei die Schraube durch eine Ausnehmung der Zwischenplatte geführt ist,**
**insbesondere wobei die Schraube in eine Gewindebohrung des Gehäuseteils eingeschraubt ist,**
**insbesondere wobei die Schraube durch eine Zwischenhülse zum Schutz des Verdrehschutzteils gegen Verpressung geführt ist, wobei die Zwischenhülse zwischen Schraube und Verdrehschutzteil angeordnet ist. Von Vorteil ist dabei, dass das Verdrehschutzteil mit der Klemmenplatte als Einheit ausgeführt ist und diese Einheit am Statorgehäuse anschraubbar ist, wobei die Schraube durch eine Ausnehmung an der als Anschlusskastenunterteil ausführbaren Zwischenplatte führbar ist.**

**Bei einer vorteilhaften Ausgestaltung ist die Zwischenplatte als Anschlusskastenunterteil ausgeführt, insbesondere wobei das Anschlusskastenunterteil auf dem Gehäuseteil des Motors, insbesondere auf dem Statorgehäuse des Motors, aufgesetzt angeordnet ist,**

**insbesondere wobei ein Anschlusskastenoberteil auf das Anschlusskastenunterteil aufgesetzt ist, so dass der Verdrehschutzrahmen und die Klemmenplatte samt Anschlussvorrichtungen in einem somit gebildeten Anschlusskasten gehäusebildend geschützt und von diesem umgeben sind. Von Vorteil ist dabei, dass** die **Klemmenplatte mit Verdrehschutzteil gehäusebildend umgeben ist.**

**Bei einer vorteilhaften Ausgestaltung ist der Verdrehschutzrahmen mit der Klemmenplatte verschraubt, wobei im Bereich der Schraubenaufnahme die Wandung des Verdrehschutzbereichs verdickt ausgeführt ist. Von Vorteil ist dabei, dass eine leistungsfähige Schraubverbindung und somit eine sichere Verbindung der Klemmenplatte mit dem Verdrehschutzteil ausführbar ist.**

Wichtige Merkmale der Erfindung bei der Anschlussanordnung, insbesondere zum Herstellen einer Verbindung von Statorwicklungsleitungen eines Elektromotors mit Versorgungsleitungen, sind, dass Anschlussvorrichtungen auf einer Klemmenplatte angeordnet sind, insbesondere an der Klemmenplatte befestigt sind,
wobei an Anschlussvorrichtungen jeweils ein Kabelschuh verbunden ist, an dem eine Leitung, insbesondere ein Wicklungsdraht, elektrisch verbunden ist,
wobei die Klemmenplatte mit einer Zwischenplatte verbunden, insbesondere schraubverbunden, ist,
wobei zwischen Klemmenplatte und Zwischenplatte ein Verdrehschutzteil zur Beabstandung der Kabelschuhe angeordnet ist.

Von Vorteil ist dabei, dass die Verdrehung der Kabelschuhe verhindert ist und somit die Sicherheit erhöht ist. Denn ein Kurzschluss oder ein Funkendurchschlag zwischen den Kabelschuhen ist verhindert. Denn durch die mittels des Verdrehschutzteils erzwungene Beabstandung ist ein Durchschlag sicher verhinderbar. Dies ist insbesondere in explosionsgeschützten Bereichen von Vorteil. Denn selbst wenn die Kabelschuhe an den auf der Klemmenplatte angeordneten Anschlussvorrichtungen nur lose befestigt sind, also mit Spiel befestigt sind, ist eine Beabstandung sicher gestellt und die Funkenbildung verhindert.

Wichtiger Vorteil der Erfindung ist auch, dass kein zusätzlicher Aufwand für das verdrehgesicherte Montieren der Kabelschuhe notwendig ist. Denn der Kabelschuh ist nur in die Schlitze, also Lücken des Verdrehschutzteils einzuführen und somit ist die Verdrehsicherung erreicht.

Erfindungsgemäß weist das Verdrehschutzteil Wandteile auf, die an einem Rahmenteil ausgebildet sind, wobei die Wandteile zueinander jeweils beabstandet sind, insbesondere also zwischen nächstbenachbarten Wandteilen jeweils eine Lücke ausgebildet ist,
insbesondere wobei die Wandteile entlang des äußeren Umfangs des plattenförmig ausgebildeten Rahmenteils angeordnet sind,
insbesondere wobei der äußere Umfang des Rahmenteils im Wesentlichen einem Rechteck gleicht. Von Vorteil ist dabei, dass der Verbindungsbereich des Kabelschuhs in Normalenrichtung in die Ausnehmungen, also Lücken, zwischen den Wandteilen einführbar ist, wobei die Normalenrichtung senkrecht steht auf der vom plattenförmigen Rahmenteil und/oder von der Zwischenplatte aufgespannten Ebene. Die Wandteile erstrecken sich zueinander im Wesentlichen parallel, wodurch die in die Zwischenräume eingeführten Kabelschuhe ebenfalls parallel ausgerichtet sind.

Erfindungsgemäß sind die Kabelschuhe jeweils zwischen zwei nächstbenachbarten Wandteilen angeordnet, insbesondere in den zwischen den Wandteilen gebildeten Lücken. Von Vorteil ist dabei, dass eine Beabstandung in einfacher Weise hergestellt ist.

Bei einer vorteilhaften Ausgestaltung ist das Verdrehschutzteil aus elektrisch isolierendem Material gefertigt, insbesondere aus Keramik und/oder Kunststoff. Von Vorteil ist dabei, dass ein hoher Isolierabstand und eine hohe Isolierfestigkeit erreichbar ist.

Bei einer vorteilhaften Ausgestaltung ist die Klemmenplatte aus elektrisch isolierendem Material gefertigt, insbesondere aus Keramik und/oder Kunststoff. Von Vorteil ist dabei, dass eine hohe lsolierfestigkeit erreichbar ist.

Bei einer vorteilhaften Ausgestaltung sind die Wandteile einstückig mit dem Rahmenteil des Verdrehschutzteils ausgebildet. Von Vorteil ist dabei, dass eine Herstellung als Spritzgussteil ermöglicht ist.

Bei einer vorteilhaften Ausgestaltung weist das Verdrehschutzteil, insbesondere das Rahmenteil, eine Ausnehmung auf, durch welche eine an der Zwischenplatte ausgebildete Erhebung hindurchführbar ist und somit eine formschlüssige Verbindung, insbesondere spielfreie Verbindung, in der Ebene des Rahmenteils herstellbar ist. Von Vorteil ist dabei, dass das Verdrehschutzteil verdrehgeschützt an der Zwischenplatte gehalten ist, wobei in Normalenrichtung, also Aufsteckrichtung, die Klemmenplatte aufgesteckt und an der Zwischenplatte angeschraubt ist. Somit ist das Verdrehschutzteil auch in der Normalenrichtung formschlüssig gehalten.

Bei einer vorteilhaften Ausgestaltung ist die Anschlussanordnung mit dem Gehäuse eines Elektromotors schraubverbindbar, insbesondere wobei die Zwischenplatte mit dem Gehäuseteil des Elektromotors schraubverbindbar ist. Von Vorteil ist dabei, dass ein Verdrehschutz erreicht ist, insbesondere bei Verwendung von mindestens zwei in Normalenrichtung angeordneten Schrauben, die somit ein Verdrehen der Teile in der Verdrehebene verhindern.

Bei einer vorteilhaften Ausgestaltung ist die Zwischenplatte aus metallischem Material gefertigt, insbesondere Aluminium enthält. Von Vorteil ist dabei, dass eine einfach Herstellung ermöglicht ist, wobei eine stabile Anbindung für die Anschlussanordnung am Motor erreichbar ist.

Bei einer vorteilhaften Ausgestaltung ist ein Ösenbereich des Kabelschuhs jeweils auf eine Gewindestange einer Anschlussvorrichtung aufgesteckt und mittels auf der Gewindetange aufgeschraubten, gegeneinander verschraubten Muttern kraftschlüssig verbunden. Von Vorteil ist dabei, dass der Kabelschuh einerseits in der Anschlussvorrichtung und andererseits in der Lücke des Verdrehschutzes gelagert ist. Eine Verdrehung in einer zur von der Rahmenplatte aufgespannten Ebene parallelen Ebene ist somit verhinderbar.

Bei einer vorteilhaften Ausgestaltung ist ein Verbindungsbereich des Kabelschuhs zur Verbindung mit einer Leitung, insbesondere Statorwicklungsdraht, vorgesehen und ist in Lücken und/oder Ausnehmungen des Verdrehschutzteils formschlüssig gehalten, insbesondere beabstandet von anderen Kabelschuhen gehalten ist. Von Vorteil ist dabei, dass ein hoher Isolationsabstand einhaltbar ist und die parallel angeordneten Kabelschuhe keinen Mindestabstand zueinander unterschreiten. Somit ist auch ein Einsatz des Motors in explosionsgeschützten Bereichen ermöglicht.

Bei einer vorteilhaften Ausgestaltung sind die Kabelschuhe voneinander beabstandet mittels Wandteilen des Verdrehschutzteils. Von Vorteil ist dabei, dass die Kabelschuhe in schlitzartige Bereiche, die sich in Normalenrichtung zur plattenförmigen Rahmenplatte des Verdrehschutzteils erstrecken, einführbar sind.

Wichtige Merkmale bei dem Elektromotor sind, dass er mit einer zuvor beschriebenen Anschlussanordnung ausgestattet ist, wobei die Anschlussanordnung im Anschlusskasten des Elektromotors angeordnet ist. Von Vorteil ist dabei, dass ein sicheres Anschließen auch im explosionsgeschützten Bereich ermöglicht ist.

Bei einer vorteilhaften Ausgestaltung ist die Zwischenplatte mit einem Gehäuseteil des Motors verbunden. Von Vorteil ist dabei, dass ein Anbringen der Anschlussanordnung am Motor ermöglicht ist. Somit ist sogar ein Anordnen der Anschlussanordnung im Anschlusskasten des Motors ermöglicht.

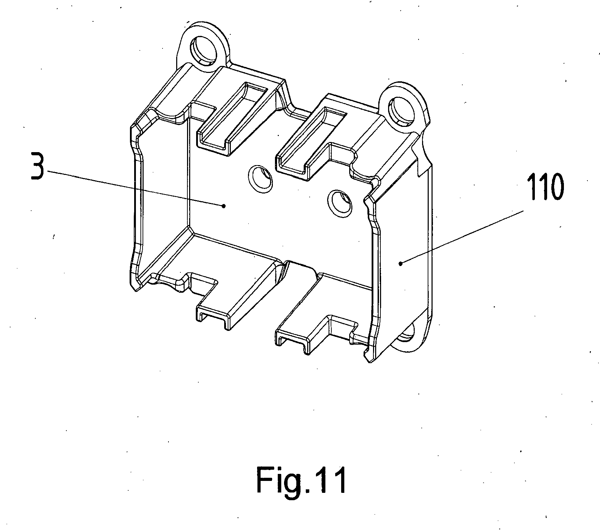

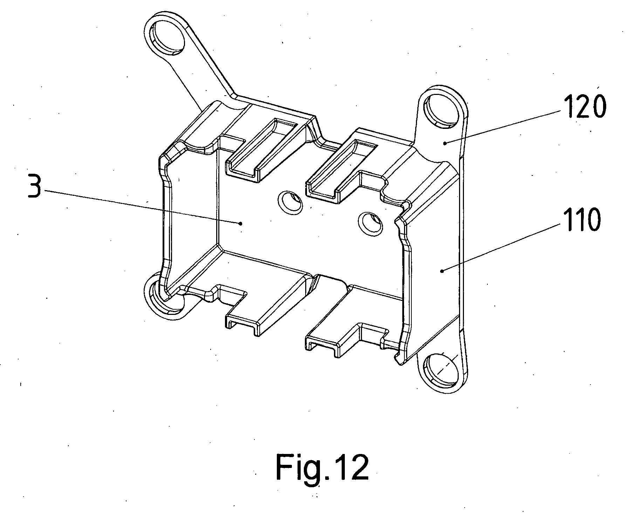

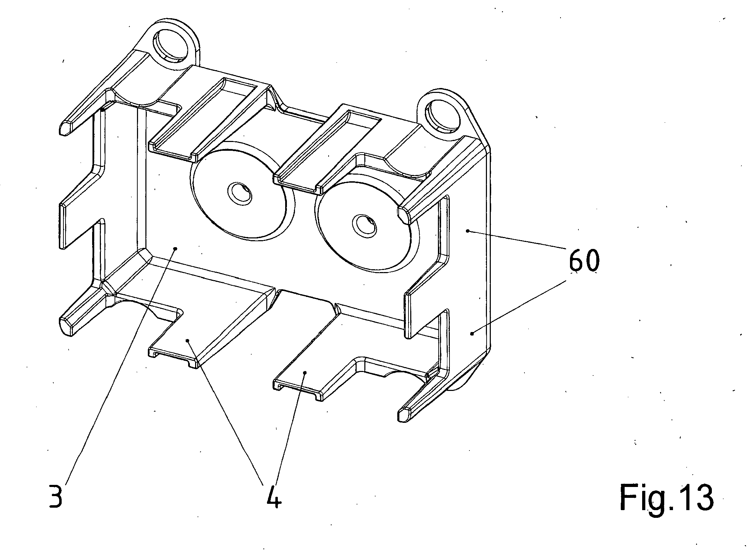

Die Erfindung wird nun anhand von Abbildungen näher erläutert:
In der Figur 1 ist eine Explosionsdarstellung der erfindungsgemäßen Anschlussvorrichtung eines Elektromotors gezeigt, wobei ein Verdrehschutzteil verwendet ist.
In der Figur 2 ist eine Draufsicht auf die erfindungsgemäße Anschlussvorrichtung gezeigt.
In der Figur 3 ist eine zugehörige Schnittansicht gezeigt.
In der Figur 4 ist eine zugehörige Schrägansicht gezeigt.
In der Figur 5 ist das Verdrehschutzteil in Schrägansicht gezeigt.
In **der** **Figur 6** **ist ein Verdrehschutzteil für ein weiteres erfindungsgemäßes Ausführungsbeispiel gezeigt.**
**In der** **Figur 7** **ist eine zugehörige Schrägansicht bei eingeführten Kabelschuhen dargestellt.**
**In der** **Figur 8** **ist ein zugehöriger Querschnitt durch die Anordnung mit Klemmenplatte 8 und Verdrehschutzteil 3 gezeigt.**
**In der** **Figur 9** **ist eine zugehörige Draufsicht gezeigt.**
**In der** **Figur 10** **ist eine zugehörige Explosionsansicht gezeigt, wobei auch das zugehörige Statorgehäuse des Motors angedeutet ist.**
**In der** **Figur 14** **ist eine zugehörige Schnittansicht bei eingebautem Zustand gezeigt.**
**In der** **Figur 11** **ist ein Verdrehschutzrahmen für ein anderes erfindungsgemäßes Ausführungsbeispiel gezeigt.**
**In der** **Figur 12** **ist ein Verdrehschutzrahmen mit verlängerten Laschenbereichen für ein anderes erfindungsgemäßes Ausführungsbeispiel gezeigt.**
**In der** **Figur 13** **ist ein Verdrehschutzrahmen für ein anderes erfindungsgemäßes Ausführungsbeispiel gezeigt.**

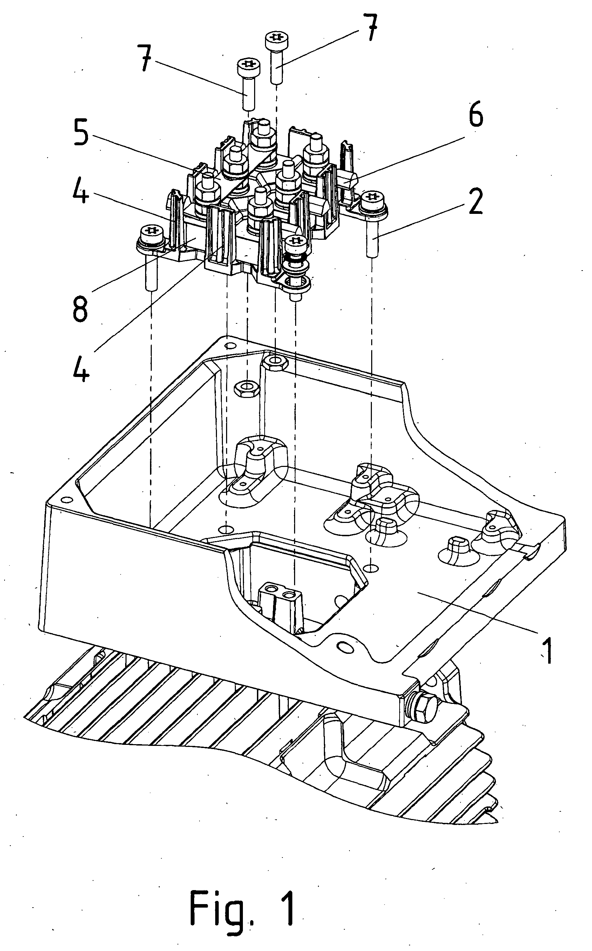

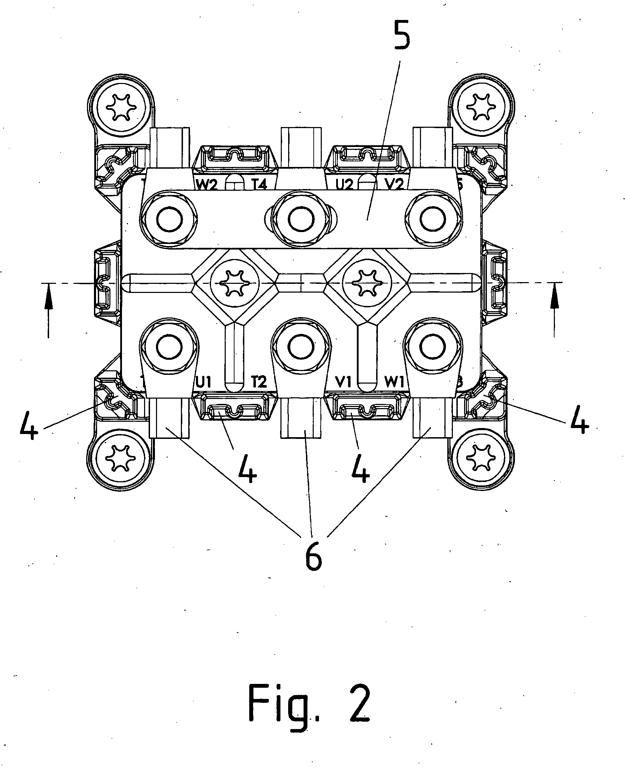

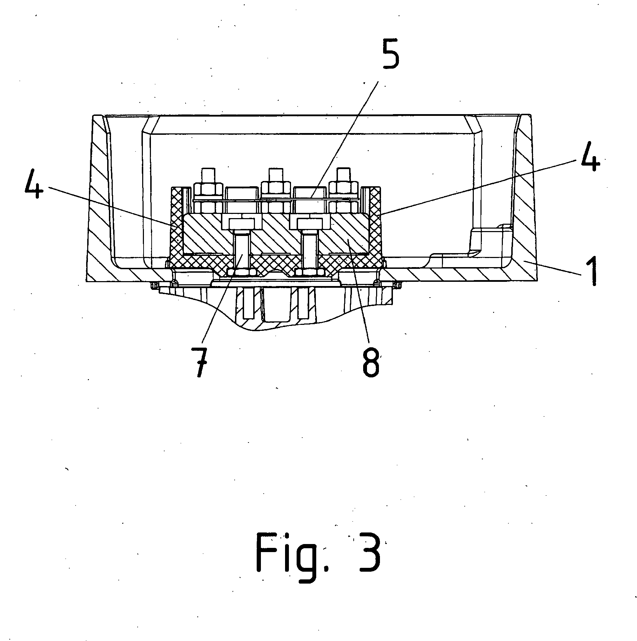

Wie in den Figuren 1 bis 5 gezeigt, ist die Zwischenplatte 1 aus metallischem Material gefertigt und auf das Gehäuse eines Elektromotors aufschraubbar, insbesondere im Bereich eines am Motorgehäuse ausgeprägten Klemmenkastenansatzes. Für die zugehörige Schraubverbindung sind die Verbindungsschrauben 2 vorgesehen, welche in entsprechende Gewindebohrungen des Motorgehäuses einschraubbar sind.

Bei weiteren erfindungsgemäßen Ausführungsbeispielen ist auf die Zwischenplatte 1 das Verdrehschutzteil aufgesetzt, wobei dieses ein plattenförmiges Rahmenteil 3 aufweist, an welchem Wandteile 4 einstückig ausgebildet sind. Dabei weist das plattenförmige Rahmenteil 3 eine Ausnehmung 50 auf, durch die beim Aufstecken des Verdrehschutzteiles auf die Zwischenplatte 1 eine zur Ausnehmung 50 entsprechend geformte Erhebung der Zwischenplatte 1 hindurchdringt. Somit ist eine formschlüssige Verbindung quer zur Aufsteckrichtung erreicht.

Wie in den Figuren 1 bis 5 gezeigt, ist das Verdrehschutzteil vorzugsweise aus einem elektrisch isolierenden Material, wie Kunststoff oder Keramik. Dabei ist das Material derart gewählt, dass eine hohe Durchschlagsfestigkeit gewährleistbar ist.

In den von den Wandteilen 4 umgebenen Raumbereich wird die Klemmenplatte8 eingeführt und mittels Schrauben 7 mit der Zwischenplatte 1 schraubverbunden.

Auf der Klemmenplatte 8 sind Anschlussvorrichtungen angeordnet. Dabei sind drei Anschlussvorrichtungen jeweils ein Kabelschuh angeschlossen. Mittels eines Verbindungsblechs 5 wird die Verschaltung des Motors bewirkt. Insbesondere ist hierbei eine Sternpunktschaltung ausgeführt. Alternativ ist aber auch eine Dreieckschaltung ausführbar. Jede Anschlussvorrichtung ist mittels einer Gewindestange gebildet auf die Gewindemuttern aufschraubbar sind, so dass Verbindungsbleche und/oder Kabelschuhe mit ihrem Ösenbereich aufsteckbar und mittels der Muttern befestigbar sind.

Die von der Statorwicklung des Stators des Motors kommenden Leitungen enden jeweils in einem Verbindungsbereich des Kabelschuhs und sind dort elektrisch verbunden mit dem metallischen Kabelschuh. Der Kabelschuh selbst ist aus einem Blech als Stanz-Biegeteil gefertigt, wobei das Ösen-Loch ausgestanzt und der Verbindungbereich biegend geformt ist.

Die Wandteile 4 stehen im Wesentlichen senkrecht auf dem im Wesentlichen ebenen plattenförmigen Rahmenteil 3. Dabei sind die Wandteile 4 entlang des Umfangs des plattenförmigen Rahmenteils 3 voneinander beabstandet angeordnet. Jedes Wandteil weist also einen Abstand auf zum nächstbenachbarten Wandteil 4. Die somit gebildeten Lücken sind für die Positionierung von Kabelschuhen 6 vorgesehen, indem der jeweilige Verbindungsbereich in der Lücke angeordnet ist.

Auch wenn also der Kabelschuh im Ösenbereich mit der Anschlussvorrichtung, insbesondere mit der Gewindestange, auf die die Öse aufgesteckt ist, nur lose verbunden wäre, beispielsweise durch ungenügendes Festschrauben der Muttern auf der Gewindestange, wird trotzdem die Schwenkbewegung des Kabelschuhs in der Ebene parallel zum plattenförmigen Rahmenteil verhindert. Auf diese Weise bleiben die Kabelschuhe zueinander beabstandet und/oder parallel ausgerichtet. Durch die Beabstandung ist ein Spannungsdurchschlag verbunden.

Die Anschlussvorrichtungen bieten eine Klemmverbindung für die Verbindungsbleche und/oder Kabelschuh. Hierzu sind auf jeder Gewindestange zumindest zwei Muttern gegeneinander verschraubt, zwischen denen das Verbindungsblech oder der Ösenbereich des Kabelschuhs vorgesehen ist.

Vorzugsweise ist das Verdrehschutzteil aus Kunststoffspritzguss gefertigt.

In einem weiteren erfindungsgemäßen Ausführungsbeispiel sind die Kabelschuhe 6 an einer anderen Anschlussvorrichtung befestigt, die keine Gewindestange und/oder Mutter aufweist.

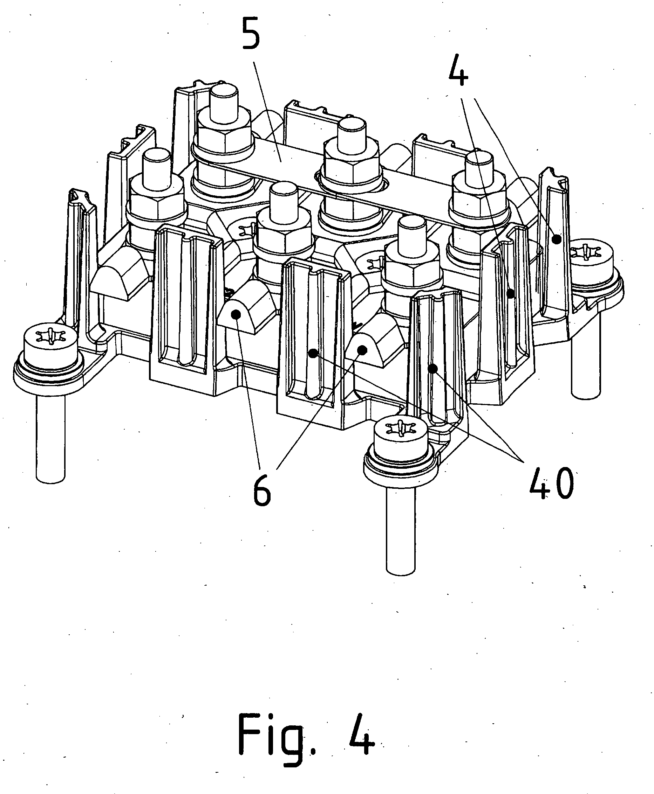

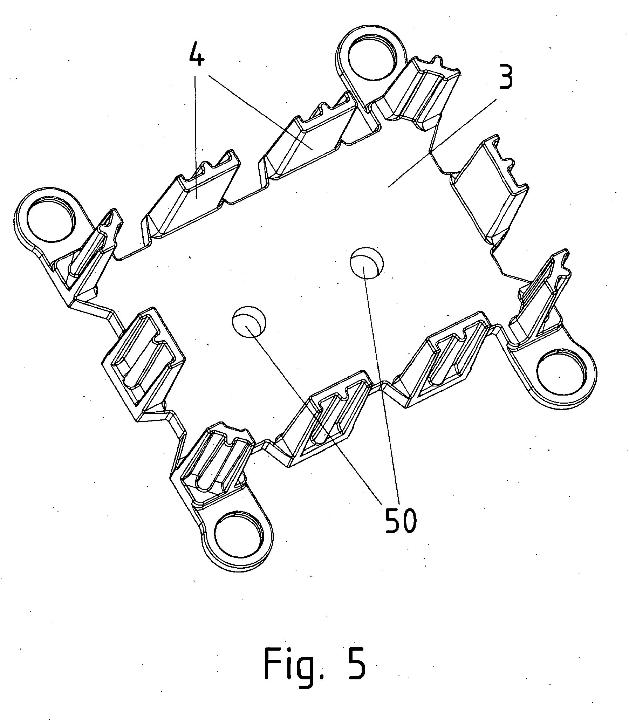

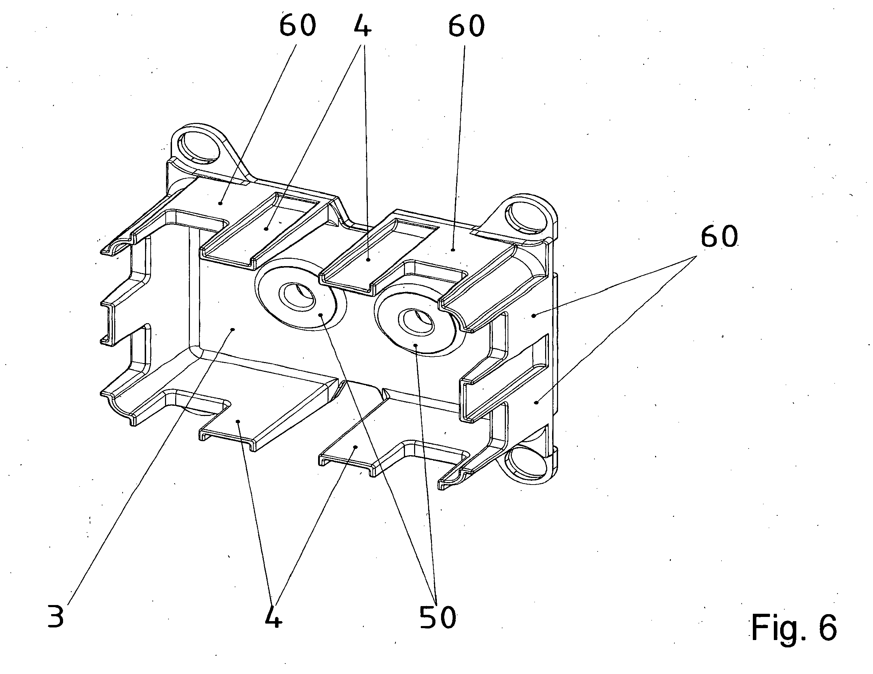

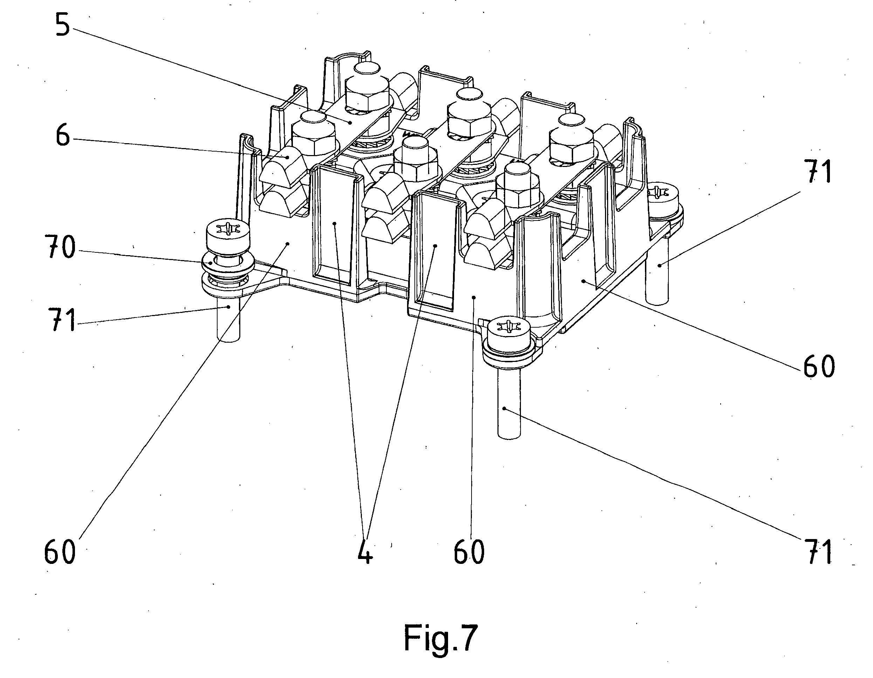

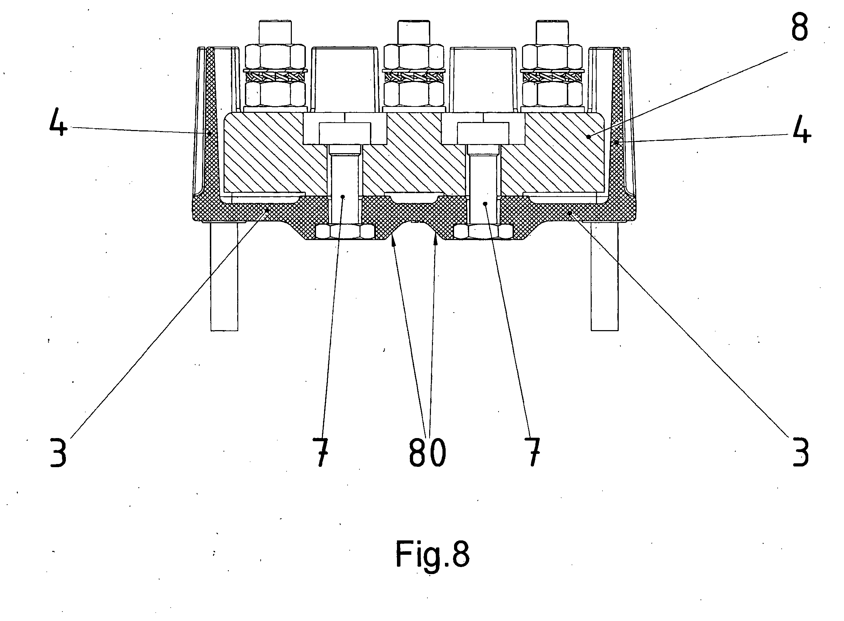

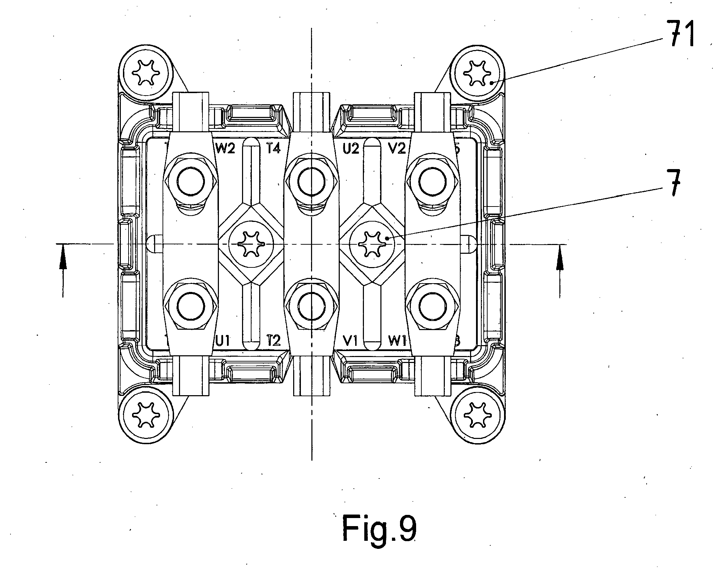

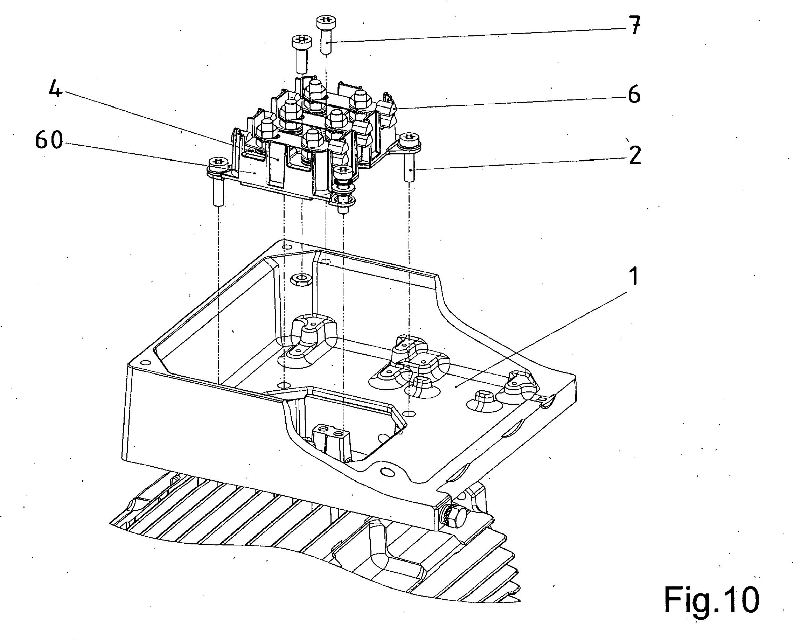

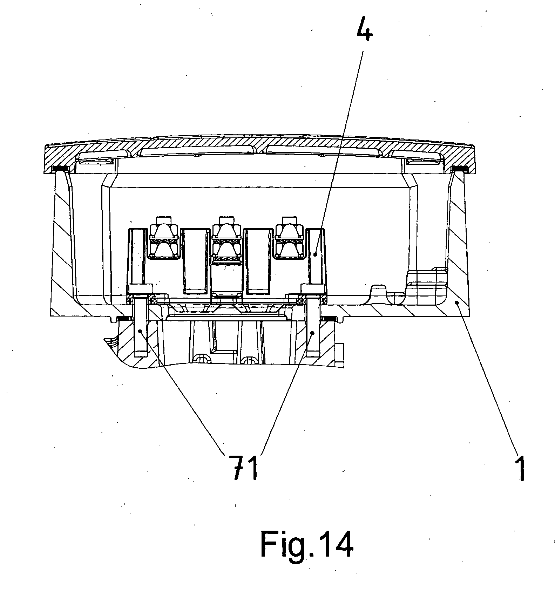

**Wie in** **Figur 6 bis Figur 10** **und** **14** **gezeigt, ist im Unterschied zur** **Figur 4** **und** **5** **am Verdrehschutzrahmen 3 zwischen den Wandteilen 4 ein Verbindungswandbereich 60 ausgeführt.**

Somit ist mittels der Verbindungswandbereiche 60 das Umknicken von Kabelschuhen 6 verhinderbar oder zumindest begrenzbar. Dabei sind diese **Verbindungswandbereiche 60 vom Grundplattenabschnitt des Verdrehschutzrahmens 3 nicht so weit hochgezogen, also hochstehend ausgeführt, wie die Wandteile 4. Somit liegen die Kabelschuhe am obersten Randbereich der Verbindungswandbereiche 60 auf, sind aber seitlich wiederum begrenzt durch die Wandteile 4.**

**Die Wandteile 4 sind im Unterschied zur** **Figur 4** **ohne Rippen ausgeführt, die dort als Versteifung und Erhöhung der Kriechstrecken wirksam sind. Denn die Verbindungswandbereiche 60 wirken ebenfalls versteifend. Das Material der Wandteile 4, welche mit den Verbindungswandbereichen 60 am Verdrehschutzrahmen 3 einstückig ausgebildet sind und erhöhen auch gewisse Kriechstrecken.**

**Im Bereich der Verbindungsschrauben 7, welche den Verdrehschutzrahmen mit der Klemmenplatte 8 verbinden, ist die Wandung des Verdrehschutzrahmens verdickt ausgeführt, so dass eine tragfähige Verbindung erreicht ist. Außerdem ist bei der sonstigen Wandung Material einsparbar.**

**Die Verbindungsschrauben 71, mit welchem der Verdrehschutzrahmen 3 ans Statorgehäuse des Motors angeschraubt ist, wobei die Verbindungsschrauben 71 durch eine Ausnehmung des Verdrehschutzrahmens 3 führen. Dabei ist eine jeweilige Zwischenhülse 70 zwischen die jeweilige Verbindungsschraube 71 und dem Verdrehschutzrahmen 3 angeordnet. Außerdem führen die Verbindungsschrauben auch durch eine Ausnehmung an der als Anschlusskastenunterteil ausgeführten Zwischenplatte 1. Somit wird beim Einschrauben der Schraube 71 in die Gewindebohrung am Statorgehäuse vom Schraubenkopf der Schraube 71 der Verdrehschutzrahmen 3 an die Zwischenplatte 1 angedrückt, wobei der Verdrehschutzrahmen 3 mittels der Zwischenhülse 70 gegen Verpressung geschützt ist. Die Zwischenhülse ist vorzugsweise aus Metall, wie Aluminium oder Stahl, wohingegen der Verdrehschutzrahmen 3 vorzugswiese aus hoch isolationsfestem Kunststoff gefertigt ist. Das Anschlusskastenunterteil ist ebenfalls aus einem Metall, wie Aluminium oder Stahl.**

### Bezugszeichenliste

- 1: Zwischenplatte
- 2: Verbindungsschraube
- 3: Rahmenteil, plattenförmig
- 4: Wandteil
- 5: Verbindungsblech zur elektrischen Verbindung
- 6: Kabelschuh
- 7: Schraube
- 8: Klemmenplatte
- 40: Wandteil
- 50: Ausnehmung
- **60**: **Verbindungswandbereich**
- **70**: **Zwischenhülse**
- **71**: **Verbindungsschraube**
- **80**: **Verdickung, verdickter Platten-Wandungsbereich**
- **110**: **Verbindungswandbereich**
- **120**: **verlängerter Laschenbereich**

## Patentansprüche

1. Anschlussanordnung **zum Herstellen einer Verbindung von Statorwicklungsleitungen eines Elektromotors mit Versorgungsleitungen,**
wobei Anschlussvorrichtungen auf einer Klemmenplatte (8) angeordnet sind,
wobei an Anschlussvorrichtungen jeweils ein Kabelschuh (6) verbunden ist, an dem eine Leitung, insbesondere ein Wicklungsdraht, elektrisch verbunden ist,
**wobei** die Klemmenplatte (8) mit einer Zwischenplatte (1) verbunden, ist
**wobei zwischen Klemmenplatte(8) und Zwischenplatte (1) ein Rahmenteil (3) eines Verdrehschutzteils angeordnet ist,**
**wobei das Verdrehschutzteil Wandteile (4, 40) zur Beabstandung der Kabelschuhe (6) aufweist, die an dem Rahmenteil (3) ausgebildet sind, wobei die Wandteile (4, 40) zueinander jeweils beabstandet sind,**
**wobei die Wandteile (4, 40) entlang des äußeren Umfangs des plattenförmig ausgebildeten Rahmenteils (3) angeordnet sind,**
**wobei die Kabelschuhe (6) jeweils zwischen zwei nächstbenachbarten Wandteilen (4, 40) angeordnet sind.**

2. **Anschlussanordnung nach mindestens einem der vorangegangenen Ansprüche,**
**dadurch gekennzeichnet, dass**
**die Zwischenplatte (1) als Anschlusskastenunterteil ausgeführt ist, insbesondere wobei das Anschlusskastenunterteil auf dem Gehäuseteil des Motors, insbesondere auf dem Statorgehäuse des Motors, aufgesetzt angeordnet ist,**
**insbesondere wobei ein Anschlusskastenoberteil auf das Anschlusskastenunterteil aufgesetzt ist, so dass der Verdrehschutzteil und die Klemmenplatte (8) samt Anschlussvorrichtungen in einem somit gebildeten Anschlusskasten gehäusebildend geschützt und von diesem umgeben sind.**

3. **Anschlussanordnung nach mindestens einem der vorangegangenen Ansprüche,**
**dadurch gekennzeichnet, dass**
**der Verdrehschutzrahmen mit der Klemmenplatte(8) verschraubt ist, wobei im Bereich der Schraubenaufnahme die Wandung des Verdrehschutzbereichs verdickt ausgeführt ist.**

4. **Anschlussanordnung nach mindestens einem der vorangegangenen Ansprüche,**
**dadurch gekennzeichnet, dass**
**in den Lückenbereichen Verbindungswandbereiche angeordnet sind, welche Wandteile (4, 40) verbinden, insbesondere wobei die Kabelschuhe (6) jeweils auf einem jeweiligen Verbindungswandbereich abgestützt, insbesondere aufliegend, angeordnet sind.**

5. Anschlussanordnung nach mindestens einem der vorangegangenen Ansprüche,
**dadurch gekennzeichnet, dass**
das Verdrehschutzteil aus elektrisch isolierendem Material gefertigt ist, insbesondere aus Keramik und/oder Kunststoff,

6. Anschlussanordnung nach mindestens einem der vorangegangenen Ansprüche,
**dadurch gekennzeichnet, dass**
die Klemmenplatte (8) aus elektrisch isolierendem Material gefertigt ist, insbesondere aus Keramik und/oder Kunststoff,

7. Anschlussanordnung nach mindestens einem der vorangegangenen Ansprüche,
**dadurch gekennzeichnet, dass**
die Wandteile (4, 40) **und/oder Verbindungwandbereiche** einstückig mit dem Rahmenteil (3) des Verdrehschutzteils ausgebildet sind.

8. Anschlussanordnung nach mindestens einem der vorangegangenen Ansprüche,
**dadurch gekennzeichnet, dass**
das Verdrehschutzteil, insbesondere das Rahmenteil (3), eine Ausnehmung aufweist, durch welche mittels Schrauben (7) eine formschlüssige Verbindung, insbesondere spielfreie Verbindung, in der Ebene des Rahmenteils (3) herstellbar ist.

9. Anschlussanordnung nach mindestens einem der vorangegangenen Ansprüche, **dadurch gekennzeichnet, dass**
die Anschlussanordnung mit dem Gehäuse eines Elektromotors schraubverbindbar ist, insbesondere wobei die Zwischenplatte (1) mit dem Gehäuseteil des Elektromotors schraubverbindbar ist.

10. Anschlussanordnung nach mindestens einem der vorangegangenen Ansprüche,
**dadurch gekennzeichnet, dass**
die Zwischenplatte (1) aus metallischem Material gefertigt ist, insbesondere Aluminium **oder Stahl** enthält.

11. Anschlussanordnung nach mindestens einem der vorangegangenen Ansprüche,
**dadurch gekennzeichnet, dass**
ein Ösenbereich des Kabelschuhs jeweils auf eine Gewindestange einer Anschlussvorrichtung aufgesteckt ist und mittels auf der Gewindetange aufgeschraubten, gegeneinander verschraubten Muttern kraftschlüssig verbunden ist.

12. Anschlussanordnung nach mindestens einem der vorangegangenen Ansprüche,
**dadurch gekennzeichnet, dass**
ein Verbindungsbereich des Kabelschuhs zur Verbindung mit einer Leitung, insbesondere Statorwicklungsdraht, vorgesehen ist und in Lücken und/oder Ausnehmungen des Verdrehschutzteils formschlüssig gehalten ist, insbesondere beabstandet von anderen Kabelschuhen (6) gehalten ist.

13. Anschlussanordnung nach mindestens einem der vorangegangenen Ansprüche,
**dadurch gekennzeichnet, dass**
die Kabelschuhe (6) voneinander beabstandet sind mittels Wandteilen des Verdrehschutzteils.

14. Elektromotor mit einer Anschlussanordnung nach mindestens einem der vorangegangenen Ansprüche,
**dadurch gekennzeichnet, dass**
die Anschlussanordnung im Anschlusskasten des Elektromotors angeordnet ist.

15. Anschlussanordnung nach mindestens einem der vorangegangenen Ansprüche,
**dadurch gekennzeichnet, dass**
die Zwischenplatte (1) mit einem Gehäuseteil des Motors verbunden ist.

## Claims

1. A connection arrangement for producing a connection of stator winding cables of an electric motor with supply lines,
wherein connection devices are arranged on a terminal plate (8),
wherein a cable lug (6) is connected to connection devices in each case, to which cable lug a line, in particular a winding wire, is electrically connected,
wherein the terminal plate (8) is connected to an intermediate plate (1),
wherein a frame part (3) of an anti-twist part is arranged between the terminal plate (8) and the intermediate plate (1),
wherein the anti-twist part has wall parts (4, 40) for spacing apart the cable lugs (6), which wall parts are formed on the frame part (3), wherein the wall parts (4, 40) are spaced apart from each other in each case,
wherein the wall parts (4, 40) are arranged along the outer periphery of the plate-shaped frame part (3),
wherein the cable lugs (6) are arranged in each case between two next-adjacent wall parts (4, 40).

2. A connection arrangement according to at least one of the preceding claims,
**characterised in that**
the intermediate plate (1) is embodied as a lower terminal-box part, in particular the lower terminal-box part being arranged placed on top of the housing part of the motor, in particular on the stator housing of the motor,
in particular with an upper terminal-box part being placed on the lower terminal-box part, so that the anti-twist part and the terminal plate (8) plus connection devices are protected in housing-forming manner in a terminal box which is thus formed and are surrounded thereby.

3. A connection arrangement according to at least one of the preceding claims,
**characterised in that** the anti-twist frame is connected by screwing to the terminal plate (8), with the wall of the anti-twist region being made thickened in the region of the screw receptacle.

4. A connection arrangement according to at least one of the preceding claims,
**characterised in that**
connecting wall regions arc arranged in the gap regions, which wall regions connect wall parts (4, 40), in particular with the cable lugs (6) being arranged supported, in particular lying, in each case on a respective connecting wall region.

5. A connection arrangement according to at least one of the preceding claims,
**characterised in that**
the anti-twist part is manufactured from electrically insulating material, in particular from ceramic and/or plastics material.

6. A connection arrangement according to at least one of the preceding claims,
**characterised in that**
the terminal plate (8) is manufactured from electrically insulating material, in particular from ceramic and/or plastics material.

7. A connection arrangement according to at least one of the preceding claims,
**characterised in that**
the wall parts (4, 40) and/or connecting wall regions are formed in one piece with the frame part (3) of the anti-twist part.

8. A connection arrangement according to at least one of the preceding claims,
**characterised in that**
the anti-twist part, in particular the frame part (3), has a cutout through which a positive connection, in particular play-free connection, can be produced in the plane of the frame part (3) by means of screws (7).

9. A connection arrangement according to at least one of the preceding claims,
**characterised in that**
the connection arrangement can be connected by screwing to the housing of an electric motor, in particular the intermediate plate (1) being able to be connected by screwing to the housing part of the electric motor.

10. A connection arrangement according to at least one of the preceding claims,
**characterised in that**
the intermediate plate (1) is manufactured from metallic material, in particular contains aluminium or steel.

11. A connection arrangement according to at least one of the preceding claims,
**characterised in that**
an eye region of the cable lug is placed in each case on a threaded rod of a connection device and is connected non-positively by means of nuts screwed on the threaded rod which are screwed against one another.

12. A connection arrangement according to at least one of the preceding claims,
**characterised in that**
a connection region of the cable lug is provided for connection with a line, in particular stator winding wire, and is held in gaps and/or cutouts of the anti-twist part in a positively locking manner, in particular is held spaced apart from other cable lugs (6).

13. A connection arrangement according to at least one of the preceding claims,
**characterised in that**
the cable lugs (6) are spaced apart from each other by means of wall parts of the anti-twist part.

14. An electric motor with a connection arrangement according to at least one of the preceding claims,
**characterised in that**
the connection arrangement is arranged in the terminal box of the electric motor.

15. A connection arrangement according to at least one of the preceding claims,
**characterised in that**
the intermediate plate (I) is connected to a housing part of the motor.

## Revendications

1. Dispositif de connexion conçu pour établir une jonction de conducteurs d'enroulements statoriques d'un moteur électrique avec des conducteurs d'alimentation, des dispositifs de connexion étant implantés sur un bornier aplati (8),
une cosse de câblage (6), à laquelle un conducteur et notamment un fil d'enroulement est connecté électriquement, étant respectivement raccordée à des dispositifs de connexion, ledit bomier aplati (8) étant relié à une platine intermédiaire (1),
une partie d'encadrement (3) d'une pièce de protection antitorsion étant interposée entre ledit bornier aplati (8) et ladite platine intermédiaire (1),
ladite pièce de protection antitorsion étant munie, en vue d'assurer l'espacement des cosses de câblage (6), de parties de cloisonnement (4, 40) ménagées sur ladite partie d'encadrement (3), lesquelles parties de cloisonnement (4, 40) sont respectivement distantes les unes des autres,
lesdites parties de cloisonnement (4, 40) étant disposées le long du pourtour extérieur de ladite partie d'encadrement (3) réalisée en forme de plaquette,
lesdites cosses de câblage (6) étant respectivement interposées entre deux parties de cloisonnement (4, 40) intimement voisines.

2. Dispositif de connexion selon au moins l'une des revendications précédentes,
**caractérisé par le fait que**
la platine intermédiaire (1) est réalisée en tant que partie inférieure d'une boîte de raccordement, sachant notamment que ladite partie inférieure de la boîte de raccordement est positionnée par mise en place sur la partie formant carter du moteur, en particulier sur le carter statorique dudit moteur,
sachant notamment qu'une partie supérieure de la boîte de raccordement est mise en place sur ladite partie inférieure de la boîte de raccordement, de telle sorte que la pièce de protection antitorsion et le bornier aplati (8), associés aux dispositifs de connexion, soient protégés dans une boîte de raccordement ainsi formée, matérialisant un boîtier qui entoure les éléments précités.

3. Dispositif de connexion selon au moins l'une des revendications précédentes,
**caractérisé par le fait que**
l'encadrement de protection antitorsion est solidarisé par boulonnage avec le bomier aplati (8), le cloisonnement de la zone de protection antitorsion étant de réalisation épaissie dans la région du logement des boulons.

4. Dispositif de connexion selon au moins l'une des revendications précédentes,
**caractérisé par le fait que**
les zones de discontinuité reçoivent des zones de parois de liaison reliant des parties de cloisonnement (4, 40), sachant notamment que les cosses de câblage (6) sont respectivement positionnées en prenant appui sur une zone respective de paroi de liaison, sur laquelle elles reposent à plat en particulier.

5. Dispositif de connexion selon au moins l'une des revendications précédentes,
**caractérisé par le fait que**
la pièce de protection antitorsion est fabriquée en un matériau électriquement isolant, notamment en céramique et/ou en matière plastique.

6. Dispositif de connexion selon au moins l'une des revendications précédentes,
**caractérisé par le fait que**
le bomier aplati (8) est fabriqué en un matériau électriquement isolant, notamment en céramique et/ou en matière plastique.

7. Dispositif de connexion selon au moins l'une des revendications précédentes,
**caractérisé par le fait que**
les parties de cloisonnement (4, 40), et/ou les zones de parois de liaison, sont réalisées d'un seul tenant avec la partie d'encadrement (3) de la pièce de protection antitorsion.

8. Dispositif de connexion selon au moins l'une des revendications précédentes,
**caractérisé par le fait que**
la pièce de protection antitorsion, notamment la partie d'encadrement (3), est munie d'un évidement par l'intermédiaire duquel, au moyen de vis (7), une liaison par complémentarité de formes, en particulier une liaison exempte de jeu peut être instaurée dans le plan de ladite partie d'encadrement (3).

9. Dispositif de connexion selon au moins l'une des revendications précédentes,
**caractérisé par le fait que**
ledit dispositif de connexion peut être solidarisé par boulonnage avec le carter d'un moteur électrique, la platine intermédiaire (1) pouvant notamment être solidarisée, par boulonnage, avec la partie formant carter dudit moteur électrique.

10. Dispositif de connexion selon au moins l'une des revendications précédentes,
**caractérisé par le fait que**
la platine intermédiaire (1) est fabriquée en un matériau métallique et renferme, en particulier, de l'aluminium ou de l'acier.

11. Dispositif de connexion selon au moins l'une des revendications précédentes,
**caractérisé par le fait**
**qu'**une zone, formant oeillet de la borne de câblage, est respectivement emboîtée sur une tige filetée d'un dispositif de connexion et est reliée, par engagement positif, au moyen d'écrous vissés sur ladite tige filetée et vissés les uns contre les autres.

12. Dispositif de connexion selon au moins l'une des revendications précédentes,
**caractérisé par le fait**
**qu'**une zone de jonction de la cosse de câblage (6) est prévue pour la jonction avec un conducteur, en particulier un fil d'enroulement statorique, et est retenue dans des discontinuités et/ou des évidements de la pièce de protection antitorsion, par complémentarité de formes, en étant notamment maintenue à distance d'autres cosses de câblage (6).

13. Dispositif de connexion selon au moins l'une des revendications précédentes,
**caractérisé par le fait que**
les cosses de câblage (6) sont espacées les unes des autres au moyen de parties de cloisonnement de la pièce de protection antitorsion.

14. Moteur électrique pourvu d'un dispositif de connexion conforme à au moins l'une des revendications précédentes,
**caractérisé par le fait que**
le dispositif de connexion est logé dans la boîte de raccordement dudit moteur électrique.

15. Dispositif de connexion selon au moins l'une des revendications précédentes,
**caractérisé par le fait que**
la platine intermédiaire (1) est reliée à une partie formant carter du moteur.
